Europäisches Patentamt

(19) European Patent Office    (11) Publication number: **0 224 966**
Office européen des brevets    **B1**

(12)    # EUROPEAN PATENT SPECIFICATION

(45) Date of publication of the patent specification:    (51) Int. Cl.⁴: **B65G 1/00**
**27.09.89**

(21) Application number: **86202117.7**

(22) Date of filing: **27.11.86**

(54) Method for loading piece goods, supplied on pallets, into a hold, particularly a hold of a vessel.

(30) Priority: **30.11.85 NL 8503319**

(43) Date of publication of application:
**10.06.87 Bulletin 87/24**

(45) Publication of the grant of the patent:
**27.09.89 Bulletin 89/39**

(84) Designated Contracting States:
**BE DE ES FR GB GR IT NL SE**

(56) References cited:
**CH-A- 535 702**
**FR-A- 2 249 004**
**GB-A- 1 267 657**
**US-A- 4 543 035**

(73) Proprietor: **Finoport Stevedoring B.V.,**
**Plantagebaan 25A, NL-4724 CG Wouw(NL)**

(72) Inventor: **Snoeijers, Jacobus Maria, Stelberg 37,**
**NL-4724 DK Wouw(NL)**

(74) Representative: **Kupecz, Arpad et al, Octroolbureau Los**
**en Stigter B.V. Postbox 20052, NL-1000 HB**
**Amsterdam(NL)**

ACTORUM AG

## Description

This invention relates to a method for loading piece goods, supplied on pallets into a hold, particularly a hold of a vessel, with the interrelationship among the piece goods being maintained until within the hold. In accordance with the invention by hold is to be understood the hold of a transporting means such as vessel, freighter, train, truck etc., which hold is suited for receiving cargo. Hereafter this invention will be described in connection with the hold of a vessel.

A known method for loading piece goods, supplied on pallets, into the hold of a vessel comprises removing the pallets stacked with piece goods, from a transporting means, such as a truck or train, by means of a forklift truck, which places the loaded pallets onto the dock. Thereupon dock-workers attach so-called pallet-rods to the pallet which in turn is hoisted on board the ship by a crane or the ship's gear. Then the palletized bags or cases are removed from the pallets and stacked in the hold one by one by workers manually. Finally, the empty pallets are returned to the dock.

This known method, however, has the disadvantage of being very labour-intensive, since removing and lifting the piece goods from the pallet, transporting them and subsequently putting them down and/or stacking said piece goods in the hold should be performed by hand. Therefore, the speed at which the hold is loaded depends to a high degree on the performance and endurance of the workers. A further disadvantage is, that this method requires an additional stacking of the piece goods in the hold, which, at a high filling rate of the hold, is difficult to accomplish. when removing the piece goods of the pallet by hand, said goods may slide over the pallet. This sliding over the mostly wooden pallets could cause damages to the bags or cases. This damages may arise when nails, bolts or splinters protrude and when the wool-work is broken. By damaging the bags or cases, also the contents of said piece goods may be damaged or may get lost as a result of the damaged packaging.

It is an object of the present invention to provide a method as described in the preamble, which efficiently removes these disadvantages.

In accordance with the present invention this method is characterized by positioning the pallet or at least the side of the pallet supporting the piece goods together with the piece goods stacked thereupon between vertically opposed clamping members, clamping the loaded pallet therebetween, rotating the thus clamped piece goods load and pallet 180° in a substantially vertical plane about a substantially horizontal axis, so that in the overturned state the pallet is on top of the piece goods load, unclamping the piece goods load and pallet, transferring the piece goods load to further transporting means either at the same time as or after said unclamping, and transporting the piece goods load in the overturned state to a desired location within the hold without breaking the interrelationship between them.

The method according to the invention offers great advantages with respect to the prior art method. After rotating the pallet with the piece goods stacked thereupon 180° and unclamping, the pallet rests freely on the piece goods, so that the pallet can be simply removed from the piece goods. This simple operation enables the piece goods to be stowed in a desired location without further manual labour; the actual moving of the piece goods load is done mechanically. By employing the method according to the invention a higher productivity per worker is obtained; the hold may be loaded quicker with less man-power being required, which results altogether in great savings for the stevedore. the shipowner as well as for the buyer and seller of the piece goods. It is also very favourable, that all the time the interrelationship among the goods is maintained. Once the piece goods having been stacked well upon the pallet, this stacking albeit in a reversed state, can be maintained until within the hold, thereby avoiding the above-mentioned disadvantages of the known method.

Further GB-A 1 267 657 relates to transferring goods delivered on a pallet from the pallet to a standard sized platen so that the goods can be transported on an internal conveyor system. The method comprises locating a platen and a pallet loaded with goods on a support device, moving said support device such that said goods on said pallet are loaded into a receptacle which is mounted for pivotal movement about a horizontal axis, clamping said support device relative to said receptacle, rotating the latter about a horizontal axis from a first or loading position so that the pallet with the goods thereon, the support device and the platen are all rotated through at least substantially 90° to a second position wherein the pallet is relieved of the weight of the goods, releasing said support device from said receptacle and moving same to remove said pallet from said goods and to move said platen into a position such that it takes the place of said pallet, returning said receptacle to its first or loading position so that the platen lies under the goods, and moving said support device to remove said goods loaded on said platen from the receptacle, and onto an internal conveyor.

In a preferred embodiment of the method according to the invention, the pallet is removed from the piece goods before the piece goods are transported into the hold.

This advantageously prevents the pallets to be hoisted aboard together with the piece goods and subsequently the empty pallets to be hoisted back ashore.

When a hold is loaded with sling bundled piece goods, ship-owners are willing to give a discount on the ship-load for ships having certain destinations, because the unloading at the place of destination proceeds in a much simpler and quicker way.

In another preferred embodiment, prior to clamping the pallet with the piece goods stacked thereupon, slings are crossed over the piece goods load with the ends of said slings being attached to each other after clamping, rotating, unclamping and removing of the pallet. Thus packing the piece goods, without the pallet, together into a bundle by means of crossed straps or slings, thereby maintaining the shape of and interrelationship among the piece goods load, is of particular advantage, since in this manner it is no longer necessary to break the interrelationship among the piece goods by means of manual labour in order to bundle them. On the other hand, the conventional way is to spread out crosswise the slings on the dock, followed by stacking thereupon the piece goods from the pallet one by, one, which involves the above-mentioned disadvantages. Hence it is of great economic advantage with respect to the conventional method, to prepare these bundles in the above-mentioned way, and to transport them subsequently into the hold.

In a particularly preferred embodiment of the present invention, the pallet loaded with piece goods is rotated in a rotating device having as vertically opposed clamping members a top wall and a bottom wall, each being provided with inwardly opened grooves, which top and bottom wall are movable towards and apart from each other.

By using a rotating device thus constructed the great advantage is obtained to engage a load of piece goods from below without subjecting the piece goods load to a sliding or stinging contact with relatively sharp projections of a lifting device. On the other hand, in order to lift piece goods supported by a smooth surface, a lifting device should be shoved underneath the piece goods load, which results in damaging the load, caused by the projections of the lifting device, considering also the great mass represented by the piece goods load and therefore the great mass resting on the undermost piece goods.

In a particularly advantageous embodiment of the method according to the present invention, before transporting the piece goods load into the hold, the piece goods load is transferred into a hoistable loading means as further transporting means with the help of a lift-transport device equipped with a push off device and with forks fitting into the grooves of the top or bottom wall respectively of the rotating device, the forks being movable in a horizontal plane substantially perpendicular to the push off or discharge direction of the piece goods.

Using a hoistable loading means enables the loose piece goods load to be transported in a simple manner into the hold while maintaining the interrelationship among the piece goods. The forks of the lift-transport device, being adapted to the grooves of the top and bottom walls of the rotating device, can be shoved freely under the piece goods load, thereby preventing damaging of this load, which load then easily can be discharged into a loading means provided with corresponding grooves.

The push device is advantageous, especially when a loose piece goods load is to be discharged onto a support surface which is not provided with grooves corresponding to the forks of the lift-transport device.

In a very preferred embodiment of the present invention the above described method can be simplified in that the pallet, stacked with piece goods, is rotated in a rotating device, which is mounted on a lift-transport device equipped with a push off device, the rotating device having clamping members each consisting of a set of forks which are movable towards and apart from each other, and after rotating and at the same time as or after unclamping, the piece goods load is transferred into a hoistable loading means as further transporting means.

In this way, the pallet, with the piece goods stacked thereupon, is lifted by one set of forks of the lift-transport device, whereafter both sets of forks are moved towards each other, thereby clamping the load, followed by rotating the load. Meanwhile the lift-transport device can be driven towards a loading means. The rotation being completed, the two sets of forks are moved apart, so that the pallet comes to hang on the uppermost set of forks, whereafter said pallet can be removed. Before or after removing this pallet, the load of piece goods can be discharged into the loading means. This discharge operation is carried out by lowering the undermost set of forks into the grooves of the loading means and subsequently withdrawing them thereout, and/or by using a push off device installed on the lift-transport device. The loaded loading means is then hoisted into the hold in the manner described hereinbefore.

In a further advantageous embodiment of the method according to the invention, as a hoistable loading means is used a cage having a floor with a structure corresponding with clamping members of the rotating device, which cage loaded with piece goods is hoisted into the hold, where the piece goods load is lifted out of the cage by a further lift-transport device and subsequently transported and discharged.

Transferring the piece goods load into a cage having such a floor construction brings on that the above described advantage, namely engaging the load from below, applies also within the hold of the vessel.

In this connection a cage can be used having two compartments separated by a partition, each compartment being suited for receiving one piece goods load.

This cage structure enables the simultaneous introduction of two loads, each one load into each side of the cage. In this way, one hoist operation transports two loads into the hold, thereby speeding up the loading.

In a very favourable embodiment of the method accor ding to the invention after hoisting the loaded cage into the hold, the piece goods load is lifted out of the cage by a further lift-transport device, equipped with corresponding forks and a push off device, and subsequently being transported and discharged.

Using such a lift-transport device within the hold has, apart from the advantages mentioned hereinbefore in connection with such device, also the favourable effect, that the hold can be filled very efficiently. Because of the maintained interrelationship among the piece goods such loads can be stacked very well up to the ceiling of the hold. Such filling cannot be obtained equally well with known methods, as with a high filling rate of the hold the working space for the workers is so small that heavy piece goods cannot be handled easily. The combination of such a lift-transport device and a cage provided with a grooved floor also enables sling bundled piece goods to be engaged from below within the hold. According to the know method one tries, on the one hand, to get the sling bundled piece goods on the desired location in the hold by means of a crane, which is not always successful because of the structure of the ship's hatches, and on the other hand, to transport these sling loads through the hold by inserting the forks of a forklift truck through a number of loops on top of the sling load, that is engaging the load from above. In order to engage a load from above a certain working space above the forks is required, which is not the case by engaging from below, resulting in the achievement of a higher stacking in the same hold when the cargo is engaged from below. Therefore a more efficient stowage of the hold is obtained.

In another embodiment of the method according to the invention a forklift truck is used as lift-transport device, the forks of which being movable in a horizontal plane substantially perpendicular to the push off or discharge direction of the piece goods.

In this way the advantage is obtained that, in cases the forklift truck cannot be maoeuvred right in front of the discharge location of the piece goods load, this load still can be discharged at the right location by a lateral movement of the forks of the forklift truck.

In another preferred embodiment of the method according to the present invention as hoistable loading means, a C-shaped hook is used, equipped with a fixed base and a respective hydraulic push off device as well as with wheels, suited for receiving one piece goods load, which C-shaped hook loaded with piece goods is hoisted into the hold, where the piece goods load is pushed off of the base by the respective push off device.

When the hold has been filled in such a way as to leave too little space to manoeuvre a lift-transport device, there exists a need for a combined loading and unloading means. This combined means preferably is the mentioned C-shaped hook, which requires no separate unloading device and only very little working space.

In a last aspect of the method according to this invention, in all operations of this method the piece goods are supported by and/or slid over smooth surfaces.

By this measure the risk of damaging the packaging of the piece goods is remarkably reduced.

Hereafter the invention will be elucidated with reference to the accompanying drawings showing three embodiments of the method according to the invention by way of example.

Fig. 1 is a schematic illustration of the different steps of a first embodiment of the method according to the invention;

Fig. 2 is a schematic representation of a number of steps of a second embodiment of the method according to the invention; and

Fig. 3 is a schematic representation of two stadia of a third embodiment of the method according to the invention.

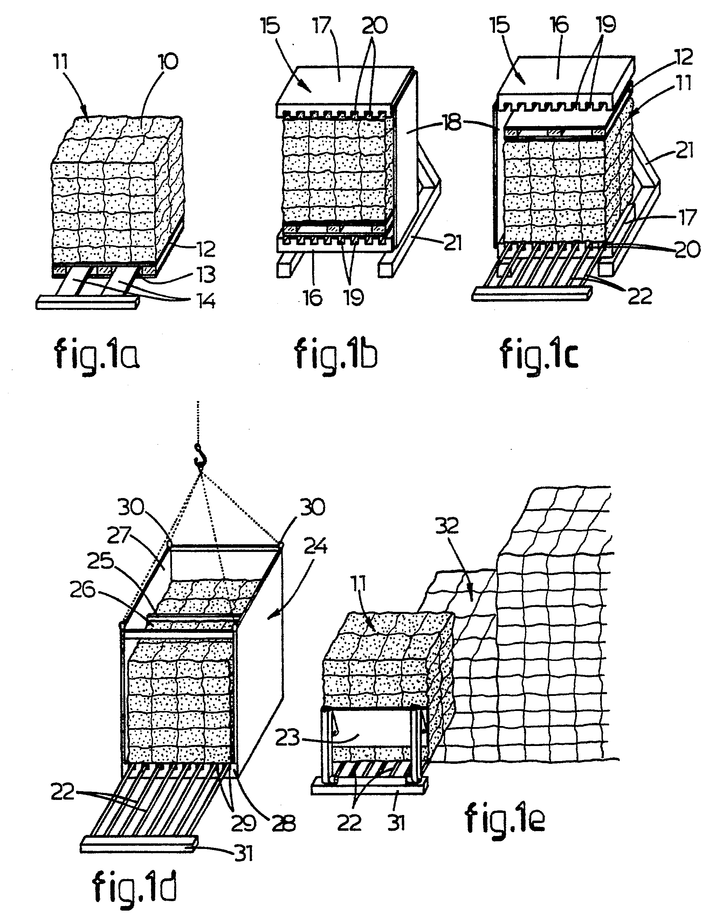

With reference to fig. 1 a method for loading a ship's hold is shown, by which piece goods, supplied on pallets, are loaded into a ship's hold.

Products usually transported in bags are for instance potatoes, sugar, fertilizer, cereals, milk powder, flour, rice, onions etc., the bags usually consisting of jute or synthetic material. Instead of bags, of course, also cartons, bales or cases etc. may be used, the packaged products mostly being tins or cans and frozen products such as butter, meat, fish, chicken etc.

Fig. 1a shows a pallet 12 positioned on a loading platform or dock or in a transporting means and loaded with piece goods 10, the piece goods 10 together forming the piece goods load 11, in the openings 13 of which pallet 12 are inserted two forks 14 of a forklift truck not shown. With the aid of forks 14 the pallet 12 together with the piece goods load 11 is lifted and then positioned into a rotating device 15, after which the forks 14 are withdrawn out of openings 13 of pallet 12.

The situation thus obtained is shown in fig. 1b. The rotating device 15 is equipped with a bottom wall 16, supporting pallet 12 together with the piece goods load 11, a top wall 17, a side wall 18 and a not-shown back wall. The bottom wall 16 and top wall 17 each are provided with inwardly open grooves 19, 20 respectively. Rotating device 15 is mounted in a frame work 21 and supplied with the necessary energy by a generator (not shown). The rotating device also can be mounted on a lift-transport device as described hereinbefore. In fig. 1b bottom wall 16 and top wall 17 have been moved towards each other over such a distance as to clamp pallet 12 with the piece goods load 11 resting thereupon. Both walls are moved towards each other simultaneously and uniformly. The force with which both walls clamp together the load is adjustable and may vary in dependence of the load. A side wall only then is required, when the top 17 and bottom wall 16 cannot be pressed together enough to hold the pallet and piece goods in a clamping engagement, because this pressing might damage the cargo. Then a side wall 18 is used to prevent the load from slipping away.

Then the rotating device 15 is rotated 180° in a substantially vertical plane, the fixed metal side wall 18 of rotating device 15 supporting the load during rotation, preventing it from slipping away, while functioning again as side wall 18 after the rotation. The rotation being completed, top wall 17 is found to be below bottom wall 16. Next top wall 17 and bottom wall 16 are moved apart, pallet 12 thereby resting freely upon piece goods load 11. The thus reversed piece goods load 11 resting freely upon top wall 17 has the same interrelationship among piece goods 10 as when stacked upon pallet 12. After rotating and removing the piece goods load 11 and pallet 12, top wall 17 may serve as bottom wall 16 during the introduction of a further piece goods load 11, and vice versa.

Referring to fig. 1c forks 22 of a forklift truck (not shown) are inserted into the grooves 20 of top wall 17 below the piece goods load 11. Piece goods load 11 then is lifted and removed out of rotating device 15, after which pallet 12 may be taken off of the piece goods load 11 (not shown). Taking off the pallet 12 may for instance be done by hand or by means of a forklift truck. Piece goods load 11 is moved by forks 22 of the forklift truck (not shown) into a cage 24 comprising two compartments 26, 27 respectively separated by a partition 25. The bottom 28 of cage 24 is provided with grooves 29 matching the grooves 19 and 20 of the rotating device 15.

With reference to fig. 1d the piece goods load 11 is placed into compartment 26 against the partition 25 of the cage 24, forks 22 being moved downwards in the grooves 29, and subsequently being taken out of the grooves 29 by driving the not-shown forklift truck backwards from the cage 24. The cage 24 is constructed in such a way as to receive two piece goods loads 11 simultaneously in compartments 26 and 27 from both sides. The number of forks 22 of the not-shown forklift truck, as well as the number of grooves 19, 20 and 29 respectively of bottom wall 16 and top wall 17 of the rotating device 15 and the floor 28 of the cage 24 respectively may be varied in dependence of the sort of cargo. This number is preferably nine. In the case of for instance bagged potatoes, the total mass in such a double cage 24 may amount to about 3600 kg (2 x 36 bags of 50 kg each). It may also be desirable to use a single cage, for receiving one load of piece goods. This is desired, especially when the hold and/or the ship's hatches are relatively small, and also when light cranes are used, such as the ship's gear, which are not able to hoist a double load.

Then the loaded cage 24 is attached to a hoisting device (not shown) via fastening points 30 of the cage 24 and hoisted into the ship's hold (not shown). Hoisting devices include for example dock cranes, mobile cranes or the ship's gear, the latter not always being equipped for hoisting such a heavy load. In the hold the cage 24 is emptied in the way described before by means of a further forklift truck (not shown) equipped with corresponding forks 22 and a push off device 23. After detaching the loaded cage 24 a second cage (not shown), meanwhile emptied, is hoisted out of the hold. The piece goods load 11 resting on the forks 22 of the forklift truck, the interrelationship of which being the same as in the palletized state, is transported to a desired location within the hold, where it is unloaded. This situation is illustrated in fig. 1e. The unloading of the piece goods load 11 in the hold takes place by bringing the forks 22 of the not-shown forklift truck above the desired location 32 and subsequently lowering the forks 22 until they come to rest upon the location 32. While the not-shown forklift truck then is being driven backwards, thereby withdrawing the forks 22 from under the piece goods load 11, the push off device 23 is simultaneously moved forwards with a velocity corresponding to that of the truck in such a way as to maintain the piece goods load 11 at the desired location 32. The device 31, to which the forks 22 and the push off device 23 are connected, being movable in a horizontal plane substantially perpendicular to the direction in which the piece goods load 11 is being pushed off, enables the piece goods load 11 to be stacked upon the desired location 32 without further operations such as moving the forklift truck itself.

In the second embodiment of the method according to the invention the pallet 12 stacked with piece goods 10 is subjected to the same series of operations as described above in connection with fig. 1a - 1c. However, instead of using a cage 24 as loading means, in the present embodiment a C-shaped hook 33, equipped with a fixed base 34 and a respective hydraulic push off device 35 as well as with wheels 36 and a lever 37, is used. The rotated piece goods load 11, without pallet 12, is positioned, in the way mentioned before, onto the metal base 34 of the C-shaped hook 33 with the help of a not-shown forklift truck equipped with forks 22 and push off device 23. The push off plate 38 of the hydraulic push off device 35 is pushed back to its starting position by placing the piece goods load 11 onto the metal base 34.

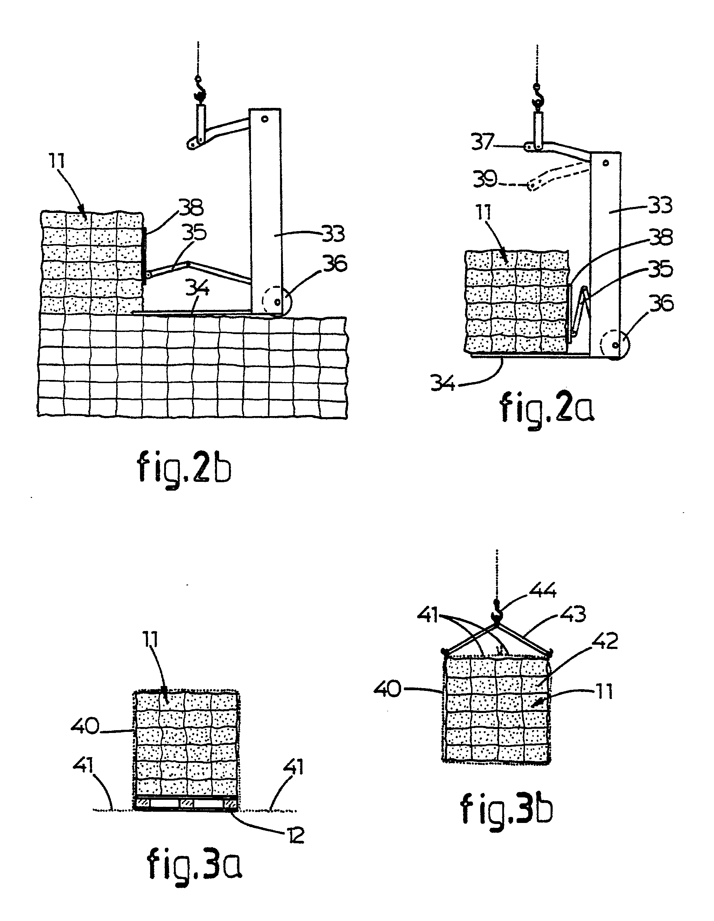

Referring to fig. 2a the C-shaped hook 33, via lever 37, is hoisted into the hold by a crane, thereby moving lever 37 upwards from its starting position, indicated at 39, thus building up a hydraulic pressure in the push off device 35 via the lever mechanism, so that a pressure is created sufficient for pushing off the piece goods load 11 of the metal base 34. This latter operation is carried out when the C-shaped hook 33 has been positioned onto the desired location within the hold, where the push off device 35 pushes, so to speak the C-shaped hook 33 away from under the piece goods load 11. This is illustrated in fig. 2b.

This preferred method especially can be applied, when the space in the hold is insufficient or not suited any more to manoeuvre a forklift truck. In this case, the described C-shaped hook 33 offers the advantage of not requiring a separate device in order to take off the load of the C-shaped hook 33 and put it down again at a desired location in the hold.

With reference to fig. 3 some aspects of a third embodiment of the method according to the invention are shown. The piece goods load 11 can be bundled by means of crossed slings or straps 40. For that purpose, see fig. 3a, slings 40 are crossed over the pallet 12 stacked with piece goods 10, prior to the rotation as described with respect to fig. 1b and 1c. After the rotation the pallet 12 is removed and the ends 41 of the crossed slings 40 are tied together to form a bundle or sling-load 42. Thereupon this sling-load 42 may be transferred into the hold by applying the preferred methods described hereinbefore. It is also possible to hoist the piece goods bundle 42 directly into the hold onto the desired location without using a loading means. This is shown in fig. 3b, where the sling-load 42 is attached to hook 44 of a crane (not shown) by means of a hoisting bridle 43. The method for loading the sling-load 42 into the hold by the preferred methods, schematically illustrated in fig. 1 and 2, is mostly applied when ship-owners give a discount on bundled cargo's;

whereas the method for loading the bundles 42 directly into the hold then is applied, when the hold is filled with cargo in such manner, that even a hydraulic C-shaped hook 33 does not have enough space to work in. The remaining unloaded space in the hold can then be filled with bundled piece goods 42, being hoisted into the hold by a crane.

As described hereinbefore, the present method may be applied to other transporting means than vessels, for instance freighters, trains, trucks etc.

By means of illustration of the particularly great advantages of the present invention the following example is given. When loading bagged cargo, such as potatoes, into a ship's hold, a shift of 15 workers can stowe in 8 hours approximately 225 tons according to the known method. On the other hand, a shift of 8–10 workers can stowe in 8 hours approximately 650–800 tons according to the method of the present invention.

## Claims

1. Method for loading piece goods, supplied on pallets, into a hold, particularly a hold of a vessel, with the interrelationship among the piece goods being maintained until within the hold, characterized by positioning the pallet (12) or at least the side of the pallet (12) supporting the piece goods (10) together with the piece goods (10) stacked thereupon between vertically opposed clamping members (16, 17), clamping the loaded pallet therebetween, rotating the thus clamped piece goods load (11) and pallet (12) 180° in a substantially vertical plane about a substantially horizontal axis, so that in the overturned state the pallet (12) is on top of the piece goods load (11), unclamping the piece goods load (11) and pallet (12), transferring the piece goods load (11) to further transporting means either at the same time as or after said unclamping, and transporting the piece goods load (11) in the overturned state to a desired location within the hold without breaking the interrelationship between them.

2. Method according to claim 1, characterized in that the pallet (12) is removed from the piece goods (10) before the piece goods (10) are transported into the hold.

3. Method according to claim 2, characterized in that, prior to clamping the pallet (12) with the piece goods (10) stacked thereupon, slings (40) are crossed over the piece goods load (11), with the ends (41) of said slings (40) being attached to each other after clamping, rotating, unclamping and removing of the pallet (12).

4. Method according to any one of the claims 1–3, characterized in that the pallet (12) stacked with piece goods (10) is rotated in a rotating device (15) having as vertically opposed clamping members a top wall (17) and bottom wall (16), each being provided with inwardly opened grooves (20 and 19 respectively), which top (17) and bottom wall (16) are movable towards and apart from each other.

5. Method according to claim 4, characterized in that before transporting the piece goods load (11) into the hold, the piece goods load (11) is transferred into a hoistable loading means as further transporting means with the help of a lift-transport device equipped with a push off device (23) and with forks (22) fitting into the grooves (20 or 19 respectively) of the top (17) or bottom wall (16) respectively of the rotating device (15), the forks (22) being movable in a horizontal plane substantially perpendicular to the push off or discharge direction of the piece goods (10).

6. Method according to claims 1–3, characterized in that the pallet (12), stacked with piece goods (10), is rotated in a rotating device (15), which is mounted on a lift-transport device equipped with a push off device (23), the rotating device (15) having clamping members (16, 17) each consisting of a set of forks which are movable towards and apart from each other, and after rotating and at the same time as or after unclamping, the piece goods load (11) is transferred into a hoistable loading means as further transporting means.

7. Method according to claims 5 and 6, characterized in that as a hoistable loading means, a cage (24) is used having a floor (28) with a structure corresponding with clamping members (16, 17) of the rotating device (15), which cage (24) loaded with piece goods (10) is hoisted into the hold, where the piece goods load (11) is lifted out of the cage (24) by a further lift-transport device and subsequently transported and discharged.

8. Method according to claim 7, characterized in that a cage (24) is used having two compartments (26 and 27) separated by a partition (25), each compartment (26 or 27 respectively) being suited for receiving one piece goods load (11).

9. Method according to claims 5 and 6, characterized in that as hoistable loading means, a C-shaped hook (33) is used, equipped with a fixed base (34) and a respective hydraulic push off device (35) as well as with wheels (36), suited for receiving one piece goods load (11), which C-shaped hook (33) loaded with piece goods (10) is hoisted into the hold, where the piece goods load (11) is pushed off of the base (34) by the respective push off device (35).

10. Method according to any one of the claims 1–9, characterized in that in all operations of this method the piece goods (10) are supported by and/or slid-over smooth surfaces.

## Revendications

1. Procédé de chargement de colis, apportés par des palettes, dans un espace de chargement, en particulier dans l'espace de chargement d'un navire, l'interrelation entre les colis étant conservée jusqu'à ce qu'ils soient dans ledit espace, caractérisé par le positionnement de la palette (12) ou au moins du côté de la palette (12) supportant les colis (10) avec lesdits colis (10) empilés dessus, entre des éléments de serrage verticalement opposés (16, 17); le serrage entre ceux-ci de ladite palette chargée; la rotation de ladite charge de colis (11) et de la palette (12) ainsi serrés sur 180° dans un plan sensiblement vertical autour d'un axe sensiblement horizontal, de sorte qu'à l'état retourné, la palette (12) se trouve sur le dessus de la charge de colis (11); le déserrage de la charge de colis (11) et de la palette (12); le transfert de la charge de colis (11) vers d'autres moyens de transport, soit simultanément avec, soit après, le déserrage; et le transport de la charge de colis (11) à l'état retourné vers un emplacement voulu à l'intérieur de l'espace sans rompre leur interrelation.

2. Procédé selon la revendication 1, caractérisé en ce que la palette (12) est enlevée des colis (10) avant que les colis (10) soient transportés dans l'espace.

3. Procédé selon la revendication 2, caractérisé en ce que, avant le serrage de la palette (12) avec les colis (10) qui y sont empilés, des courroies (40) sont croisées sur la charge de colis (11), les extrémités (41) desdites courroies (40) étant réunies l'une à l'autre après le serrage, la rotation, le déserrage et l'enlèvement de la palette (12).

4. Procédé selon l'une quelconque des revendications 1 à 3, caractérisé en ce que la palette (12) sur laquelle sont empilés les colis (10) est retournée dans un dispositif rotatif (15) ayant, comme éléments de serrage verticalement opposés, une paroi de dessus (17) et une paroi de fond (16), chacune étant pourvue de rainures (respectivement 20 et 19) s'ouvrant vers l'intérieur, lesdites parois de dessus (17) et de fond (16) étant déplaçables en direction et à l'écart l'une de l'autre.

5. Procédé selon la revendication 4, caractérisé en ce qu'avant de transporter la charge de colis (11) dans l'espace, la charge de colis (11) est transférée dans des moyens de chargement hissables comme moyens de transport complémentaires avec l'aide d'un dispositif de transport élévateur équipé d'un dispositif éjecteur (23) et de fourches (22) s'adaptant aux rainures (respectivement 20 ou 19) de la paroi, respectivement, de dessus (17) et de fond (16) du dispositif rotatif (15), les fourches (22) étant mobiles dans un plan horizontal sensiblement perpendiculaire à la direction d'éjection ou d'évacuation des colis (10).

6. Procédé selon les revendications 1 à 3, caractérisé en ce que la palette (12), sur laquelle sont empilés les colis (10), est retournée dans un dispositif rotatif (15) qui est monté sur un dispositif de transport élévateur équipé d'un dispositif éjecteur (23), le dispositif rotatif (15) ayant des éléments de serrage (16, 17) dont chacun est formé d'un jeu de fourches mobiles en direction et à l'écart l'une de l'autre, et, après rotation, et en même temps ou après le desserrage, la charge de colis (11) est transférée dans des moyens de chargement hissables comme moyens de transport complémentaires.

7. Procédé selon les revendications 5 et 6, caractérisé en ce que, comme moyens de chargement hissables, on utilise une cage (24) ayant un plancher (28), dont la structure correspond aux éléments de serrage (16, 17) du dispositif rotatif (15), laquelle cage (24) chargée des colis (10) est hissée dans l'espace où la charge de colis (11) est levée hors de la cage (24) par un dispositif de transport élévateur complémentaire, puis transportée et déchargée.

8. Procédé selon la revendication 7, caractérisé en ce que l'on utilise une cage (24) ayant deux compartiments (26 et 27) séparés par une cloison (25), chaque compartiment (respectivement 26 ou 27) convenant à recevoir une charge de colis (11).

9. Procédé selon les revendications 5 et 6, caractérisé en ce que l'on utilise, comme moyens de chargement hissables, un "crochet" en forme de C (33) équipé d'une base fixe (34) et d'un dispositif éjecteur hydraulique respectif (35), ainsi que de roues (36), convenant à recevoir une charge de colis (11), le "crochet" en forme de C (33) chargé des colis (10) étant hissé dans l'espace où la charge de colis (11) est éjectée de la base (34) par le dispositif éjecteur respectif (35).

10. Procédé selon l'une quelconque des revendications 1 à 9, caractérisé en ce que, pendant toutes les opérations de ce procédé, les colis (10) sont supportés par, et/ou glissés sur, des surfaces lisses.

**Patentansprüche**

1. Verfahren zum Verladen von auf Paletten gelieferten Stückgütern in einen Laderaum, insbesondere in einen Laderaum eines Schiffes, wobei der Stapelverband zwischen den Stückgütern aufrechterhalten wird, bis sie sich in dem Laderaum befinden, dadurch gekennzeichnet, daß die Palette (12) oder wenigstens die Seite der Palette (12), welche die Stückgüter trägt, zusammen mit den darauf gestapelten Stückgütern zwischen vertikal entgegengesetzten Spannelementen (16, 17) positioniert wird, daß die beladenen Palette dazwischen gespannt wird, daß die so eingespannte Stückgutladung (11) und die Palette (12) um 180° in einer im wesentlichen senkrechten Ebene um eine im wesentlichen horizontale Achse rotiert wird, so daß die Palette sich im umgedrehten Zustand oben auf der Stückgutladung (11) befindet, daß die Stückgutladung (11) und die Palette (12) abgespannt werden, daß die Stückgutladung (11) entweder gleichzeitig mit oder nach der genannten Abspannung auf eine Weiterbeförderungsvorrichtung verlegt wird, und daß die Stückgutladung (11) im umgedrehten Zustand zu einer gewünschten Stelle innerhalb des Laderaumes transportiert wird, ohne daß der Stapelverband zwischen den Stückgütern gebrochen wird.

2. Verfahren gemäß Anspruch 1, gekennzeichnet dadurch, daß die Palette von den Stückgütern (10) abgetrennt wird, bevor die Stückgüter (10) in den Laderaum transportiert werden.

3. Verfahren gemäß Anspruch 2, gekennzeichnet dadurch, daß vor dem Einspannen der Palette (12) mit den darauf gestapelten Stückgütern (10) Riemen über die Stückgutladung (11) gekreuzt werden, wobei die Enden der genannten Riemen (40) nach dem Spannen, Rotieren, Abspannen und Abtrennen der Palette (12) miteinander befestigt sind.

4. Verfahren nach allen Ansprüchen 1 bis 3, gekennzeichnet dadurch, daß die mit Stückgütern (10) beladene Palette (12) in einer Rotationsvorrichtung (15) rotiert wird, welche als vertikal entgegengesetze Spannelemente eine Oberwand (17) und eine Unterwand (16) besitzt, wobei beide mit nach innen geöffneten Rillen (20 bzs. 19) ausgestattet sind, wobei die Oberwand (17) und die Unterwand (16) aufeinander und auseinander bewegbar sind.

5. Verfahren nach Anspruch 4, gekennzeichnet dadurch, daß vor dem Transport der Stückgutladung (11) in den Laderaum die Stückgutladung (11) in eine hebbare Verladevorrichtung als Weiterbeförderungsmittel verlegt wird, und zwar mit Hilfe einer Hubtransportvorrichtung, welche mit einer Abschiebevorrichtung (23) ausgestattet ist sowie mit Gabeln (22), welche in die Rillen (20 bzw. 19) der Ober- (17) bzw. Unterwand (16) der Rotationsvorrichtung (15) einpassen, wobei die Gabeln (22) in einer horizontalen Ebene im wesentlichen rechtwinklig zur Abschiebe- oder Laderichtung der Stückgüter (10) bewegbar sind.

6. Verfahren nach den Ansprüchen 1 bis 3, gekennzeichnet dadurch, daß die mit Stückgütern (10) beladene Palette (12) in einer Rotationsvorrichtung (15) rotiert wird, welche auf einer mit einer Abschiebevorrichtung ausgestatteten Hubtransportvorrichtung montiert ist, wobei die Rotationsvorrichtung (15) Spannelemente (16, 17) besitzt, welche jeweils aus einem Satz Gabeln besteht, welche aufeinander und auseinander bewegbar sind, wobei nach dem Rotieren und gleichzeitig mit oder nach dem Abspannen die Stückgutladung (11) in eine hebbare Verladevorrichtung als Weiterbeförderungsmittel verlegt wird.

7. Verfahren nach den Ansprüchen 5 und 6, dadurch gekennzeichnet, daß als hebbares Verladungsmittel ein Käfig (24) verwendet wird, welcher einen Boden besitzt, dessen Aufbau den Spannelementen (16, 17) der Rotationsvorrichtung (15) entspricht, wobei der mit Stückgütern (10) beladene Käfig (24) in den Laderaum gehoben wird, wo die Stückgutladung (11) mittels einer weiteren Hubtransportvorrichtung aus dem Käfig (24) gehoben wird und anschließend transportiert und abgeladen wird.

8. Verfahren nach Anspruch 7, dadurch gekennzeichnet, daß ein Käfig (24) verwendet wird, welcher zwei Räume (26 und 27) besitzt, welche durch eine Trennwand getrennt sind, wobei jeder Raum (26 bzw. 27) geeignet ist, eine Stückgutladung aufzunehmen.

9. Verfahren nach den Ansprüchen 5 und 6, dadurch gekennzeichnet, daß als hebbares Verladungsmittel ein C-förmiger Haken verwendet wird, welcher mit einem feststehenden Boden (34) sowie mit einer hydraulischen Abschiebevorrichtung (35) und Rädern (36) ausgestattet ist und geeignet ist, eine Stückgutladung (11) aufzunehmen, wobei der mit Stückgütern beladene C-förmige Haken in den Laderaum gehoben wird, wo die Stückgutladung (11) mittels der Abschiebevorrichtung (35) vom Boden abgeschoben wird.

10. Verfahren nach allen Ansprüchen 1 bis 9, dadurch gekennzeichnet, daß bei allen nach diesem Verfahren ablaufenden Arbeitsgängen die Stückgüter (10) von glatten Oberflächen getragen werden und/oder über glatte Oberflächen gleiten.

fig.1a

fig.1b

fig.1c

fig.1d

fig.1e

fig.2b

fig.2a

fig.3a

fig.3b